(19) **Europäisches Patentamt European Patent Office Office européen des brevets**

(11) **EP 3 228 610 B1**

(12) **FASCICULE DE BREVET EUROPEEN**

(45) Date de publication et mention
de la délivrance du brevet:
**11.03.2026 Bulletin 2026/11**

(51) Classification Internationale des Brevets (IPC):
*C04B 28/06* (2006.01)   *C04B 28/14* (2006.01)
*C04B 18/04* (2006.01)

(21) Numéro de dépôt: **16305406.7**

(22) Date de dépôt: **07.04.2016**

(52) Classification Coopérative des Brevets (CPC):
(C-Sets disponibles)
**C04B 28/065; C04B 18/0463; C04B 28/14;**
C04B 2111/00767; Y02W 30/91   (Cont.)

(54) **PROCÉDÉ DE TRAITEMENT PAR IMMOBILISATION DE MERCURE ÉLÉMENTAIRE CONTENU DANS DES DÉCHETS**

AUFBEREITUNGSVERFAHREN DURCH IMMOBILISIERUNG VON ELEMENTAREM QUECKSILBER, DAS IN ABFÄLLEN ENTHALTEN IST

METHOD FOR TREATING ELEMENTAL MERCURY CONTAINED IN WASTE BY IMMOBILISATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**11.10.2017 Bulletin 2017/41**

(73) Titulaire: **SECHE ECO INDUSTRIES**
**53811 Changé (FR)**

(72) Inventeur: **HOFFMANN, David**
**53140 Saint-Ouen-des-Toits (FR)**

(74) Mandataire: **Ernest Gutmann - Yves Plasseraud S.A.S.**
**C/o Plasseraud IP**
**104 Rue de Richelieu**
**CS 92104**
**75080 Paris Cedex 02 (FR)**

(56) Documents cités:
**EP-A2- 2 476 649**   **WO-A1-2010/144149**
**CN-A- 101 456 717**   **JP-A- 2001 070 926**
**JP-A- 2015 098 432**   **US-A- 4 844 815**
**US-A1- 2015 152 011**

(52) Classification Coopérative des Brevets (CPC):
(Cont.)

C-Sets
**C04B 18/0463, C04B 20/023;**
**C04B 28/065, C04B 14/10, C04B 18/0463,**
**C04B 2103/65;**
**C04B 28/14, C04B 7/323, C04B 14/10,**
**C04B 18/0472, C04B 24/42**

**Description**

L'invention a pour objet un procédé de traitement par immobilisation physique, de mercure élémentaire contenu dans des déchets notamment des déchets industriels. L'invention a aussi pour objet un système liant formant une matrice et pouvant être utilisé dans ledit procédé de traitement qui est capable d'intégrer directement les déchets mercuriels apportés sous la forme déchet solide, pâteux ou liquide (notamment d'effluent) contenant du mercure sous forme oxydée.

Le mercure est présent dans les trois compartiments de l'environnement : l'eau, l'air et les sols ; sous les formes inorganiques aux degrés d'oxydation 0, I ou II et sous les formes organiques. Il s'associe avec de nombreux éléments pour donner des formes mercurielles qui regroupent les composés mercureux et mercuriques, les composés organiques, les amalgames et le mercure particulaire.

Le mercure élémentaire ou métallique (Hg°) est le seul métal liquide à température ambiante qui se caractérise par une extrême volatilité. Très peu soluble dans l'eau, Hg° possède un coefficient de répartition atmosphère-eau élevé, et se trouve donc en faible quantité dans le milieu aquatique. A température ordinaire et à sec, le mercure n'est pas oxydé par l'air mais en présence de vapeur d'eau, l'oxydation peut se produire lentement.

L'action des métaux sur le mercure conduit à la formation d'alliages métalliques appelés amalgames souvent liquides à température ambiante.

Les composés mercureux (degré d'oxydation I) sont, quant à eux, obtenus par action d'un acide sur du mercure en excès. Les sels mercureux dérivent d'une base faible et, par conséquent, sont hydrolysés en solution. Ces composés sont instables et ont tendance à se dismuter en mercure métal et en composés mercuriques.

Le mercure à l'état mercurique (degré d'oxydation II) forme des composés stables avec l'oxygène, le chlore, le brome, l'iode, le soufre et de nombreux anions (nitrate, sulfate, cyanure, etc...).

Le chlorure mercurique présente une solubilité élevée dans l'eau, contrairement aux bromures et aux iodures, et les cristaux de ce sel émettent des vapeurs dès la température ordinaire. L'oxyde mercurique est peu soluble dans l'eau, il se décompose en mercure et oxygène sous l'effet de la lumière ou de hautes températures. Quant à l'hydroxyde mercurique, il existe en solution aqueuse mais n'a jamais pu être isolé. Le sulfate mercurique s'hydrolyse par ailleurs dès qu'il est en contact avec l'eau. Le nitrate mercurique est stable en milieu acide. Enfin, dans l'eau, l'ion sulfure $S^{2-}$ précipite le mercure divalent sous la forme de sulfure mercurique HgS (cinabre).

Sur le plan industriel, le mercure métal était jusqu'à présent réintroduit, après un éventuel lavage, dans un circuit de revalorisation, notamment en réemploi dans les procédés d'électrolyse au mercure. Or, ces procédés seront interdits d'ici quelques années ce qui conduit à rechercher d'autres modes de traitement du mercure.

Dans l'état antérieur de la technique, les procédés d'encapsulation du mercure les plus connus s'effectuent généralement en deux étapes : un polysulfure transforme (ou stabilise) le mercure en sulfure de mercure et ce dernier est ensuite transformé en boue par addition d'une substance minérale. La stabilisation du mercure métallique la plus courante dans la littérature est réalisée avec du soufre bien que cette technique soit couramment décrite comme un procédé « d'amalgamation ». On forme ainsi un sulfure de mercure ou cinabre très insoluble dans l'eau. L'inconvénient de cette technique est que le milieu aqueux a pour résultat la formation d'une boue liquide ; ainsi ce procédé doit être suivi d'une étape de solidification ou bien de séparation.

La stabilisation recherchée est donc l'immobilisation chimique par combinaison avec des espèces immobiles afin de réduire la libération des éléments dangereux dans l'atmosphère ou la biosphère.

Divers procédés ont ainsi été proposés dans le passé. Le procédé décrit dans le brevet US4147626A concerne essentiellement le traitement d'effluents en provenance des installations d'électrolyse au mercure ; les quantités de mercure élémentaire traitées sont alors de l'ordre de 720 ppb pour une teneur totale 1390 ppb. L'emploi direct de sulfure de sodium ou d'hydrogéno-sulfure de sodium est préconisé dans une gamme de pH de 7 à 13 pour précipiter à la fois ce mercure ionisé et élémentaire. La formation de complexe mercurique $[HgS_2]^{2-}$ soluble étant proscrite, l'addition de chlorure ferrique au milieu réactionnel conduit à éliminer ce sulfure excédentaire empêchant toute formation de ce complexe. Aucune étape de solidification n'est mise en œuvre dans ce brevet.

Le brevet US4844815A conduit à traiter également des déchets issus des ateliers de production du chlore par électrolyse, notamment des boues contenant 54 ppm de mercure élémentaire. Il est alors ajouté du soufre élémentaire en particulier en milieu basique en vue de former du HgS : 0,5 à 3% de soufre sont ajoutés au déchet et complétés jusqu'à 10% de soude pour l'obtention de ce précipité. Du ciment est alors ajouté au mélange sans précisions sur ses performances de stabilité. Le brevet US6403044B1 a décrit la méthodologie et l'appareillage pour convertir les formes dangereuses du mercure en un produit stable incluant l'addition au mercure liquide de polysulfure et de soufre élémentaire pour former un matériau pâteux ensuite converti en un produit solide par adjonction de vermiculite, perlite, ciment, etc... à raison de 20 à 40% du produit initial. Le volume de mélange peut être toutefois augmenté d'un facteur 4 et seul l'ajout de sable est décrit dans les exemples. L'inconvénient principal de cette méthode réside dans le fait que, dans le résultat final, le mercure, bien que sous forme sulfure, n'est pas encapsulé dans un bloc monolithique et les autres composés (soufre résiduel, sels, etc...) ne sont pas sous une forme compatible avec le stockage en installation de déchets dangereux (ISDD) (inflammabilité du soufre, lixiviation des sels). Ainsi selon l'exemple 1 donné dans ce brevet, il reste environ 70% du soufre initial intact et la totalité des sels de calcium ajoutés.

Dans le brevet US6911570B2, une réserve a été émise sur l'efficacité du procédé du brevet US6403044B1 pour traiter le mercure métal pur lorsque des conditions très strictes ne sont pas réunies, qui font notamment appel à un mélange très intime et très énergique réalisé à partir de la machine décrite dans ce brevet plus récent et associé à une température d'au moins 60°C.

La demande WO2006016076A1 décrit aussi un procédé de stabilisation du mercure métallique par réaction de ce mercure avec le soufre à l'état élémentaire dans lequel on met en contact le mercure et le soufre à un rapport molaire Hg/S de 1/1 à 1/3 dans un réacteur spécialement conçu pour cette mise en œuvre, la température de réaction optimale se situant entre 60 et 80°C. Aucune étape de stabilisation complémentaire n'est décrite dans cette demande qui propose de former du sulfure de mercure. Comme les autres brevets, cette demande ne traite pas le principal de la décomposition lente du sulfure de mercure en milieu oxydant (incluant l'air) ou à la lumière.

Le brevet US7914757B1 décrit également la formation de sulfure de mercure par l'addition conjointe de soufre et de polysulfure, ceci en particulier sous vide pour éviter les émanations de vapeurs mercurielles.

Le brevet US8580880B2 décrit un procédé direct d'oxydation du mercure par le soufre en chauffant le mélange à 160°C. L'encapsulation est réalisée par l'addition d'un copolymère organique pour former un « ciment au soufre » qui consiste en fait en une réticulation de ce copolymère par le soufre selon une réaction assez proche de la vulcanisation. Ce procédé présente un faible ratio d'augmentation volumique. Cependant, la température élevée de la réaction initiale et la nature partiellement organique du produit final obtenu limitent l'applicabilité du procédé.

Enfin, le brevet JP 2015 098432 décrit un procédé de traitement de matériaux contaminés par des métaux lourds en utilisant un agent de solidification qui est à base de ciment, pour immobiliser les métaux lourds. Ce brevet décrit aussi une méthode de traitement de matériaux solides contaminés par des métaux lourds, qui permet la solidification du matériau comprenant des métaux lourds avec de la poudre de ciment, tout en préservant l'élution des composés de métaux lourds.

L'invention propose de remédier au moins en partie aux inconvénients des techniques antérieures, en fournissant un procédé de traitement du mercure élémentaire comprenant la transformation du mercure élémentaire en sulfure de mercure suivie d'une opération d'encapsulation du sulfure de mercure produit, par incorporation directe, en particulier sous la forme d'une boue mercurielle liquide comprenant le sulfure de mercure, dans une matrice comprenant un liant ettringitique à base de sulfo-aluminate de calcium, une argile et un agent hydrofuge de masse, pour former un produit solide, en particulier un monolithe, ou un produit pâteux dans lequel le mercure est immobilisé, la matrice pour l'encapsulation comprenant les proportions suivantes de composés : de 0,1 à 4T de liant ettringitique à base de sulfo-aluminate de calcium pour 0,1 à 4T, d'argile et 2 à 250kg d'agent hydrofuge pour une quantité de déchets mercuriels traités de 1T.

Ainsi, le mercure élémentaire doit, dans une première étape, être transformé en sulfure de mercure par toute technique disponible ou doit être fourni sous cette forme puis, si nécessaire, être mis sous forme liquide, en particulier sous forme de boue liquide pour être traité selon une deuxième étape ou opération par encapsulation conformément à l'invention et ainsi être immobilisé.

Ainsi, le procédé de traitement du mercure élémentaire comprend une opération de stabilisation du mercure sous la forme de sulfure de mercure et l'intégration du sulfure de mercure produit dans une matrice stable et pérenne, en particulier pour former un produit solide ou pâteux. Avantageusement le produit obtenu à l'issue du traitement répond aux obligations de comportement imposées par la législation européenne. Le procédé selon l'invention comprend une étape d'intégration directe de « boue mercurielle » dans un système liant à fort pouvoir de captation d'eau formant une matrice, qui permet d'éviter d'avoir à déshydrater la boue mercurielle. Le mercure sulfurisé de la boue mercurielle ou de toute forme physique (solide, liquide ou pâteuse) des déchets traités selon l'invention et le cas échéant d'autres polluants contenus dans les déchets à traiter se trouve(nt) de ce fait encapsulé(s).

Comme indiqué ci-dessus d'autres déchets mercuriels (contenant du mercure sous forme mercurique ou mercureux) ainsi que d'autres polluants, notamment minéraux, peuvent être également intégrés à ce niveau dans la matrice du système liant.

Le texte décrit également, afin de répondre aux normes actuelles en termes de lixiviation et de comportement, un système liant spécifiquement formulé dont la structure permet d'intégrer un grand nombre de molécules dans son réseau et qui est compatible avec les métaux lourds, ledit système étant à base d'alumine, de calcium et de sulfate et comprenant par ailleurs une argile pour assister la solidification ainsi qu'un système d'hydrofuge de masse pour compléter l'inertage et fortement limiter les interactions du produit solide obtenu, notamment du monolithe avec l'eau.

Selon un mode de réalisation particulier préféré de l'invention le procédé de traitement de déchets mercuriels aboutissant à l'immobilisation du mercure élémentaire (ou mercure métal, Hg°) après sa conversion en sulfure de mercure, comprend :

- une opération de stabilisation chimique en milieu aqueux du mercure élémentaire pour produire du sulfure de mercure, en particulier à l'état de boue mercurielle (en particulier de boue mercurielle liquide) suivie par,

- une opération d'encapsulation pour former un produit solide, en particulier un monolithe, ou un produit pâteux, par incorporation directe du sulfure de mercure, en particulier de la boue mercurielle, dans une matrice comprenant un liant ettringitique à base de sulfo-aluminate de calcium, une argile et un agent hydrofuge de masse.

Le procédé selon l'invention est donc un procédé d'immobilisation physique (par encapsulation) du mercure élémentaire et le cas échéant d'autres polluants contenus dans les déchets à traiter, suivant une opération de formation de sulfure de mercure, en particulier par voie de stabilisation chimique.

Alternativement, le sulfure de mercure peut être produit par voie thermique.

Le procédé selon l'invention s'applique au traitement des déchets comprenant du mercure métal ou mercure élémentaire et permet en premier lieu d'obtenir du mercure sous une forme chimique et un état physique compatibles avec le stockage c'est-à-dire répondant aux normes de lixiviation, en particulier du mercure lixiviable en une quantité inférieure en élément mercure (Hg) à 2mg/kg et avantageusement inférieure à 1mg/kg ou très avantageusement inférieure ou égale à 0,2mg/kg et même à 0,005mg/kg de matière sèche. La mesure du mercure lixiviable peut être effectuée par toute méthode en soi connue, en particulier sur une matrice aqueuse au moyen d'un spectromètre d'émission plasma (ICP).

Le sulfure mercurique obtenu, en particulier à l'issue de l'étape de stabilisation chimique en milieu aqueux, est une forme chimique peu soluble dans l'eau acceptable pour le stockage. Cependant, pour tenir compte du fait que le sulfure mercurique est susceptible de s'oxyder au contact de l'air, les ions sulfure pouvant alors se transformer et libérer du mercure métal, l'invention fait suivre l'opération de préparation de sulfure de mercure, en particulier par stabilisation chimique du mercure en milieu aqueux, d'une opération d'encapsulation dans une matrice aboutissant à la formation d'un solide ou d'un produit pâteux pouvant être manipulé afin de préparer un solide stable dans le temps. Dans un mode de réalisation particulier de l'invention, on prépare un solide sous la forme d'un monolithe.

L'étape de durcissement du mercure encapsulé des déchets traités destinée à la préparation du produit solide et stable issu du traitement des déchets est modulée en fonction du produit final recherché qui peut être un produit solide ou un produit pâteux susceptible d'être manipulé, notamment coulé ou extrudé. La formation du produit solide stable au stockage peut nécessiter plus d'un jour, en particulier de 2 à 10 jours, la durée étant aussi fonction de la température.

De façon générale, les déchets traités (issus du traitement) selon l'invention peuvent être stockés conformément aux normes en vigueur, dans des installations de stockage à l'air libre.

Le procédé selon l'invention permet, dans un mode de réalisation particulier, d'obtenir un produit solidifié qui est un monolithe. En l'espèce un déchet monolithique est un déchet solidifié possédant des dimensions minimales et des propriétés physiques et mécaniques garantissant son intégrité pendant une période donnée dans des conditions de stockage déterminées, en l'occurrence dans une installation de type ISDD. Les propriétés d'un déchet monolithique sont par exemple sa résistance à la force de compression avant et après une exposition à l'eau (valeur limite 1MPa), l'absence de délitement à l'eau, le caractère réducteur du produit. Il est fait référence en particulier aux tests rapportés dans les exemples montrant le caractère de monolithe des déchets traités.

Selon un mode particulier de réalisation de l'invention, l'opération de stabilisation chimique du mercure des déchets selon le procédé de l'invention comprend une étape de sulfuration du mercure dans une solution de polysulfure à une température comprise dans un intervalle de 18°C à 60°C, en particulier à une température de 40°C, pour former un sulfure de mercure insoluble et stable, dans des déchets mercuriels sulfurés. Après traitement selon l'invention, les déchets sont obtenus en milieu réducteur.

Le polysulfure utilisé est obtenu par la réaction du soufre - le cas échéant préalablement mélangé avec les déchets de façon à imprégner le soufre avec le mercure - avec un sulfure en milieu aqueux, par exemple avec un sulfure choisi parmi le sulfure de sodium, en particulier le sulfure de sodium nonahydraté $Na_2S.9H_2O$, le sulfure de potassium, le sulfure d'ammonium, le sulfure de magnésium ou le sulfure de calcium. Le polysulfure peut par exemple être de la bouillie nantaise formée à partir de sulfure de calcium.

Avantageusement préalablement à la mise en contact avec un sulfure choisi, le soufre est mélangé avec les déchets à traiter de façon à permettre l'imprégnation (l'absorption) du mercure sur le soufre. De cette manière un solide pelletable est formé qui est ensuite mis en contact avec le sulfure pour produire *in situ* du polysulfure dans des conditions permettant par sulfuration, la production de sulfure de mercure. Les déchets et le soufre peuvent être mis en contact dans un rapport massique de 1 tonne de déchets pour un maximum de 0,5 tonne de soufre. Alternativement la quantité de soufre peut être choisie dans un intervalle de 0,2 à 1 tonne lorsque la quantité de mercure élémentaire dans les déchets à traiter va de 0,2 à 2 tonnes. En d'autres termes, la quantité de soufre apportée peut être égale à la quantité de déchets à traiter mais elle est le plus souvent inférieure d'au moins 50% en poids de soufre apporté.

Alternativement, le polysulfure est préparé avant la mise en contact avec les déchets, par réaction du soufre avec une solution concentrée de sulfure, par exemple de sulfure de sodium, de sulfure de potassium, de sulfure d'ammonium, de sulfure de magnésium ou de sulfure de calcium. La dissolution du soufre en milieu aqueux pour obtenir une solution concentrée est favorisée par une augmentation de la température, par exemple en effectuant la dissolution à une température voisine de la température de fusion du soufre considéré (autour de 40°C pour le sulfure de sodium).

Dans un mode de réalisation particulier de l'invention l'opération de stabilisation chimique comprend donc une étape de mise en contact du mercure et du polysulfure dans un rapport molaire S/Hg de 2 à 10, à une température de l'ordre de 20 à 100°C et en particulier à un pH basique notamment un pH supérieur ou égal à 7,5.

La sulfuration est effectuée dans un réacteur, sous agitation, par exemple en apportant pour une quantité donnée de déchets, une quantité en poids inférieure de moins de 20% ou une quantité égale de sulfure et une quantité allant de 30 à 50% en poids de soufre par rapport à la quantité de mercure élémentaire dans les déchets traités. Ainsi, on peut réaliser la sulfuration en apportant 1 tonne de sulfure pour 1,45 tonnes de mercure élémentaire dans les déchets à traiter mélangés au soufre (1 tonne de mercure élémentaire dans les déchets à traiter pour 450kg de soufre) ou des quantités différentes déterminées sur la base des mêmes proportions entre le sulfure, le soufre et les déchets. Dans le réacteur, le soufre se dissout dans le sulfure en milieu aqueux, libérant des particules de mercure qui sont directement oxydées par le soufre dissous dans le mélange. Le sulfure de mercure obtenu est une boue de couleur rouge ou de couleur noire selon la composition en mercure.

L'opération de stabilisation chimique par sulfuration du mercure dans les déchets peut être réalisée sur une durée d'au moins 8 heures.

L'opération d'encapsulation peut ensuite être réalisée pour piéger physiquement le sulfure de mercure dans la matrice d'encapsulation. Le déchet traité après cette étape d'encapsulation est stable et en particulier le mercure lixiviable qu'il pourrait contenir est inférieur à 2mg/kg de matière sèche et de préférence inférieur à 1mg/kg ou très avantageusement inférieur ou égal à 0,2mg/kg ou encore inférieur ou égal à 0,005mg/kg du fait de sa double immobilisation, physique et chimique. Avantageusement, le produit obtenu à l'issue du traitement présente en outre un potentiel redox compris dans un intervalle de -50 à -600mV, en particulier de -150 à -500mV en milieu alcalin.

Dans un mode de réalisation particulier du procédé selon l'invention, la matrice d'encapsulation comprend les composés suivants :

> a. un liant ettringitique à base de clinker sulfo-alumineux et de sulfate de calcium, notamment un liant à base de clinker de sulfoaluminate de calcium ou un liant à base d'aluminate tri-calcique,
> b. une argile,
> c. un agent hydrofuge de masse qui comprend un composé organosilanequi est un agent à base de siliconeauquel est ajouté du stéarate de calcium.

Un liant ettringitique pour l'utilisation dans un procédé selon l'invention est une substance ou une composition de substances ayant la capacité de former de l'ettringite par absorption de l'eau contenue dans les déchets traités. L'ettringite se forme lors de la phase de durcissement des déchets traités. Le liant ettringitique pour l'utilisation dans un procédé selon l'invention est avantageusement apporté sous la forme d'une poudre dont la granulométrie est supérieure ou égale à 200$\mu$m pour faciliter la réaction.

Le liant à base de sulfo-aluminate de calcium peut être composé essentiellement de sulfo-aluminate de calcium ou peut être adjuvanté, par exemple pour augmenter la cinétique de la réaction. Alternativement ou en complément de l'adjuvantation, le liant peut intégrer dans sa structure divers composés contenus dans les déchets qui influencent les paramètres notamment cinétiques de la réaction. Un liant ettringitique à base de sulfo-aluminate de calcium comprend en outre les composés suivants : par adjuvantation, et/ou par intégration des composés du déchet à traiter, un composé ettringitique dans lequel le calcium est remplacé par du zinc, du manganèse (II), du cuivre(II) ou du baryum, l'alumine est remplacée par de l'oxyde de fer et/ou le sulfate est remplacé par un carbonate, chlorure, nitrate, chromate ou molybdate, notamment en substitution par les composés des déchets.

Un système ettringitique composite peut ainsi comprendre un liant carboettringitique, chloroéttringitique, de la shigaite, ou un sel de Friedel, lesdits composés étant apportés en complément ou en substitution d'une partie du liant ettringitique de sulfo-aluminate de calcium.

L'ettringite formée lors du durcissement piège dans son réseau le mercure ionique du sulfure de mercure et le cas échéant les autres ions des déchets traités.

Dans un mode de réalisation particulier de l'invention, le liant à base de sulfo-aluminate de calcium est formé à partir de clinker sulfo-alumineux et de sulfate de calcium ; en particulier, il s'agit d'un liant à base de clinker de sulfoaluminate de calcium (tel que le clinker ALICEM ou obtenu à partir du clinker ALIPRE commercialisés par la société Ciments Clacia). Le clinker sulfo-aluminate de calcium s'hydrate au contact de l'eau (l'ettringite peut consommer au moins 32 molécules d'eau contre 2 pour un ciment classique) qui conduit à une double action de durcissement et d'assèchement accompagnée de l'intégration du sulfure de mercure dans le réseau de l'ettringite.

Dans un autre mode de réalisation de l'invention, le liant ettringitique à base de sulfo-aluminate de calcium est formé à partir d'aluminate tri-calcique et de sulfate de calcium.

Le liant ettringitique peut encore être complété par d'autres ingrédients ou additifs influençant la vitesse de prise, son intensité ainsi que d'autres paramètres, choisis parmi les suivants, pris seuls ou en combinaison ou remplacés par les réactifs qui permettent de les obtenir :
le Triethanolamine (TEA), le triisopropanolamine (TIPA), le diethanolamine (DEA), l'acide citrique et ses sels, l'acide lactique et ses sels, l'acide formique et ses sels, l'acide acétique et ses sels, l'acide oxalique et ses sels, l'acide tartrique et ses sels, les acides 2-hydroxy-carboxylique et leurs sels, les aluminates alcalins, les fluoroaluminates et leurs analogues, les chloroaluminates et leurs analogues, les sulfoaluminates et leurs analogues, les sels de manganèse (II), les sels ferriques, les carbonates alcalins, le calcaire, le carbonate de magnésium ultrafins, les sels de lithium, la glycine.

La matrice d'encapsulation mise en œuvre dans le procédé selon l'invention comprend par ailleurs une argile (en cela compris un mélange d'argiles) sous forme de poudre dont la granulométrie est inférieure ou égale à 100 $\mu$m. Diverses argiles peuvent être utilisées, seules ou en mélange et peuvent par exemple être choisies parmi les kaolinites, la bentonite, la montmorillonite ou leurs mélanges. L'argile est une aide à la solidification du produit en absorbant l'eau mais aussi par sa fonction de modificateur granulaire permettant d'éviter les phénomènes de type ressuage.

En outre, la matrice d'encapsulation utilisable dans le procédé l'invention comprend un agent hydrofuge de masse c'est-à-dire un agent hydrofuge introduit dans la masse des déchets lors de leur traitement. Dans ce cadre, la matrice d'encapsulation peut comprendre un composé organosilane.

Un composé organosilane est un composé organo fonctionnel de formule RnSiX(4-n) (n=1, 2, 3) où X désigne un groupement hydrolysable (alcoxy, halogénure, carboxylate R,CO2) et R est un groupement organique non hydrolysable porteur d'une fonction. Des composés hydrofuges de masse utilisables dans le cadre de l'invention sont disponibles dans le commerce et peuvent par exemple être SIKA WT-155 (commercialisé par la société Sika France), Dow Corning SHP 50 et SHP 60+ (commercialisés par la société Dow Corning) etc...

Un composé organo-silane utilisé dans le cadre de l'invention est capable de réagir avec l'eau présente dans le système considéré des déchets mis au contact du liant ettringitique pour former un gel de silicone hydrophobe encapsulant les particules du réseau. Dans un mode de réalisation particulier de l'invention, le composé organo-silane est adjuvanté pour augmenter son caractère hydrophobique, par exemple par des composés de la famille des carboxylates lourds, notamment des stéarates, par exemple du stéarate de calcium, ou par des oléates, notamment des oléates de calcium comme le SIKA HW ou encore l'huile de silicone. La formulation de l'agent hydrofuge de masse peut également faire appel à un agent mouillant par exemple Alcopol 60 de BASF.

Le système hydrofuge complète l'inertage et limite les interactions du solide formé avec l'eau, notamment l'eau de lixiviation. Ainsi, l'additif hydrofuge forme autour de la combinaison d'argile, d'ettringite et de sulfure de mercure, une couche hydrophobe de type silicone. Les adjuvants éventuellement présents dans l'hydrofuge bouchent la porosité restante du matériau formé.

Dans un mode de réalisation particulier de l'invention, les proportions de liant ettringitique et d'argile de la matrice d'encapsulation sont identiques en poids. Dans un autre mode de réalisation particulier de l'invention, la proportion en poids d'argile dans la matrice d'encapsulation est inférieure jusqu'à 50% à la proportion en poids de liant ettringitique.

Dans un mode de réalisation particulier de la matrice utilisable dans le procédé selon l'invention, les proportions des composés sont les suivantes, pour 1 tonne de déchets traités : de 0,1 à 4 tonnes, en particulier de 0,2 à 2 tonnes, de liant ettringitique, notamment de liant à base de clinker de sulfoaluminate de calcium pour 0,1 à 4 en particulier de 0,1 à 2 tonnes d'argile et 2 à 250kg d'agent hydrofuge.

La matrice d'encapsulation pour l'utilisation dans un procédé selon l'invention est capable d'intégrer la boue (boue mercurielle ou déchet mercuriel sulfuré) issue du traitement par stabilisation chimique dans une structure stable et pérenne. Dans ces conditions, la boue mercurielle obtenue ne nécessite pas d'être déshydratée avant d'être incorporée dans la matrice. L'incorporation est donc directe.

L'invention ainsi décrite permet de transformer le mercure des déchets en sulfure de mercure qui ne se décompose pas en milieu oxydant, y compris au contact de l'air, ou à la lumière et peut être stocké dans des installations de stockage de déchets dangereux (ISDD). Le produit résultant du traitement selon l'invention peut être stocké à long terme, sans que l'on observe de dégagement de vapeurs de mercure, y compris lorsque la température s'élève.

Pour assurer leur stabilité à long terme, les déchets traités selon le procédé selon l'invention doivent se trouver encapsulés dans un milieu réducteur. Ainsi, le traitement de stabilisation chimique par formation de sulfure de mercure doit être réalisé en conditions réductrices par exemple en présence d'un excès de sulfure mis au contact des déchets mercuriels.

Dans un aspect de la description, la matrice comportant le système liant est apportée dans une proportion de 0,1 à 2 en masse, par rapport à la masse de déchets à traiter.

Lorsque le mercure des déchets mercuriels est stabilisé chimiquement, sous la forme de déchets mercuriels sulfurés en milieu réducteur, ils sont mis en contact avec les composés aptes à former la matrice d'encapsulation, dans un malaxeur. Les composés de la matrice d'encapsulation peuvent être introduits dans le malaxeur sans mélange préalable entre eux.

L'étape de malaxage par exemple dans un malaxeur planétaire, un pétrin, un malaxeur à palettes, est avantageusement de courte durée ; elle peut par exemple être réalisée pendant une durée de moins de 10 minutes, par exemple pendant une durée de 1 à 7 minutes ou une durée de 1 à 3 minutes et est suivie d'une étape de durcissement optionnellement réalisée dans un système de conditionnement du produit solidifié, par exemple des alvéoles de stockage ou des bigbags.

Les composés constituant la matrice d'encapsulation peuvent être apportés au malaxeur dans des proportions en masse de 0,1 à 2 tonnes par exemple 0,6 tonne d'argile pour 2 à 250 kg, par exemple 50 kg d'hydrofuge de masse et 0,1 à 2 tonnes de liant ettringitique, par exemple 0,9 tonnes de liant ALICEM. Ces proportions de composés de la matrice peuvent par exemple être mises en œuvre pour traiter 1 tonne de mercure métal en présence d'1 tonne de solution de sulfure et 0,5 tonne de soufre,

L'ordre de l'incorporation des composés de la matrice dans le malaxeur peut être : en premier lieu un apport d'argile suivi de l'agent hydrofuge suivi du liant ettringitique.

On obtient en sortie de malaxeur une pâte éventuellement coulable ou extrudable (par exemple une pâte mortier) qui peut être soumise à une étape de durcissement pour former des déchets traités solides, par exemple des monolithes.

Les déchets mercuriels pouvant être traités dans le cadre de l'invention comprennent tout type de déchets, notamment industriels, comprenant du mercure élémentaire. En particulier il s'agit de déchets à forte concentration en mercure Hg°, par exemple avec une concentration en mercure supérieure ou égale à 1%, en particulier supérieure ou égale à 5%, notamment supérieure ou égale à 10% ou supérieure ou égale à 20% en masse, en particulier avec une concentration en mercure élémentaire allant de 1%, 5% ou 10% à 100% en masse, ou même par exemple de 20 à 100%. De tels déchets ont la particularité de contenir du mercure sous forme de billes difficilement attaquables. Lorsque les déchets sont des déchets industriels ils comprennent au moins 1%, en particulier au moins 5%, notamment au moins 10% ou 20% et par exemple de 10% à 40% de mercure élémentaire.

Les déchets mercuriels à traiter sont des déchets comprenant, outre du mercure élémentaire, des polluants choisi parmi les composés mercuriels sous forme mercurique ou mercureux, ou parmi les polluants minéraux suivants: Nickel, Sodium, Aluminium, Arsenic, Baryum, Calcium, Cadmium, Cobalt, Chrome, Cuivre, Fer, Potassium, Magnésium, Manganèse, Molybdène, Phosphore, Plomb, Antimoine, Selenium, Etain, Vanadium, Zinc, Tallium, Tellure, Strontium, Silicium et Fluorure

Les déchets mercuriels à traiter selon l'invention peuvent être ou comprendre des bétons pollués au mercure, des déchets de cellules à électrolyse, des déchets du recyclage des ampoules à basse consommation d'énergie, des néons, des boues mercurielles, des charbons actifs mercuriels, des amalgames dentaires.

Il est observé que les déchets mercuriels traités (issus du traitement selon l'invention) sont récupérés sous la forme d'un produit solide ou le cas échéant pâteux, le mercure étant immobilisé après sulfurisation dans un milieu réducteur qui n'est donc pas sensible à l'oxydation par l'air.

Selon un mode de réalisation particulier de l'invention, le procédé selon l'invention, de traitement de déchets mercuriels comprenant l'immobilisation physique du mercure élémentaire comprend ainsi les étapes suivantes :

    a. dans un réacteur, effectuer une sulfuration par :

        i. apport dans ledit réacteur du polysulfure à l'état liquide, en particulier de polysulfure de sodium, de polysulfure de potassium, de polysulfure d'ammonium, de polysulfure de calcium,
        ii. addition au produit de l'étape i) de soufre sous forme solide et des déchets à traiter contenant du mercure élémentaire ou addition d'un mélange solide de ces déchets avec du soufre ledit mélange étant préalablement effectué dans des conditions permettant d'imprégner le mercure sur le soufre,

    b. transférer les produits obtenus à l'étape a. dans un malaxeur et ajouter, le cas échéant successivement et dans cet ordre, une argile, un agent hydrofuge de masse et un liant ettringitique à base de sulfo-aluminate de calcium, en particulier un liant ettringitique à base de clinker de sulfoaluminate de calcium,
    c. malaxer pendant une durée de 0,5 à 10 minutes, en particulier pendant une durée inférieure à 5 minutes, notamment pendant 1 à 3 minutes, jusqu'à obtention d'une pâte, en particulier d'une pâte mortier extrudable ou coulable,
    d. optionnellement réaliser une étape de durcissement jusqu'à obtention d'un produit solidifié, en particulier d'un monolithe.

Dans un mode de réalisation particulier du procédé, le polysulfure est obtenu à l'issue d'une épate de chauffage du sulfure solide à une température au moins égale à la température de fusion dudit sulfure, par exemple du sulfure de sodium hydraté chauffé à environ 60°C.

Dans un mode de réalisation particulier de l'invention, le procédé comprend en outre une étape de contrôle du fait que la teneur en mercure gazeux contenu dans le produit solide obtenu à l'issue du traitement est en quantité inférieure à 2 $mg/m^3$, notamment en quantité inférieure à 0,05 $mg/m^3$ ou inférieure à 0,005 mg/kg. La mesure des vapeurs mercurielles peut être faite au moyen d'un appareil Dräger ou quand les limites de détection de cet appareil sont atteintes, au moyen d'un appareil de type Mercury Vapor Indicator (MVI) commercialisé par la société Ion Science.

A titre illustratif, il est mentionné que le procédé selon l'invention conduit, à partir d'une masse de déchets initiale à traiter d'environ 1000 kg à obtenir au fil des étapes réalisées, des déchets mercuriels mélangés à du soufre solide ayant une masse d'environ 1500kg, des déchets mercuriels sulfurés ayant une masse d'environ 2500kg et des déchets après encapsulation ayant une masse d'environ 4000kg, soit un foisonnement massique global de 4. Le volume des déchets considérés selon cet exemple serait d'environ 75l avant le traitement alors qu'il serait de 1800l après encapsulation en fin de traitement soit foisonnement volumique de 24, beaucoup plus important que le foisonnement massique du fait de la densité élevée du mercure élémentaire,

L'invention a aussi pour objet un procédé selon l'invention dans lequel une composition pouvant être utilisée comme matrice comprend un liant ettringitique à base de sulfo-aluminate de calcium, une argile et un agent hydrofuge de masse et dans laquelle :

a. le liant ettringitique à base de sulfo-aluminate de calcium, est un liant ettringitique à base de clinker sulfo-alumineux et de sulfate de calcium, en particulier un liant à base de clinker de sulfoaluminate de calcium ou un liant à base d'aluminate tri-calcique et

b. l'agent hydrofuge de masse, est un composé organosilane, qui est un agent à base de silicone additionné de stéarate de calcium.

Les composés de ladite composition sont en particulier ceux qui ont été définis dans le cadre de mode de réalisation particulier du procédé de l'invention.

Les composés de la composition peuvent être fournis séparément.

D'autres caractéristiques et avantages de l'invention apparaîtront dans les figures et les exemples qui suivent.

Figure 1 : la figure montre une boue de couleur rouge obtenue après la réaction d'oxydation/sulfuration du mercure élémentaire

Figure 2 : la figure montre un tableau des résultats obtenus après traitement de mercure lorsque la matrice comprenant le système liant comprend ou non un agent hydrofuge. Les résultats visuels d'un test de lixiviation sont donnés sur un lixiviat brut et sur un lixiviat filtré. La présence de l'agent hydrofuge permet de prévenir significativement la lixiviation.

Figure 3: la figure montre les photographies des lixiviats sur échantillons broyés.

## Exemples

Description détaillée du procédé et mise en œuvre

Les paramètres considérés lors de la conception du procédé selon l'invention, les conditions de réalisation ainsi que les résultats obtenus ressortent des exemples qui suivent.

• Transformation du mercure métal en une forme chimique compatible avec le stockage

La transformation du mercure métal en une forme chimique compatible en installation de stockage de déchets dangereux (ISDD) nécessite que cette forme réponde aux critères suivants :

- stabilité chimique dans le milieu pour éviter notamment la re-formation de mercure métal,
- non volatilité du mercure,
- insolubilité du mercure mesurée par un test de lixiviation à l'eau pendant 24h.

• Formes compatibles avec le stockage

La norme de lixiviation 24H indique que la quantité de mercure lixiviable doit être inférieure à 2 mg/kg MS (de Matière Sèche) en élément Hg. De ce fait, pour un matériau pollué en mercure, la solubilité de la forme du mercure doit être inférieure à 20 µg/l. Les formes oxyde et hydroxyde n'ont pas une solubilité suffisamment faible pour atteindre cet objectif. Le mercure métal, quant à lui, est soluble à environ 25 µg/l.

Le tableau ci-dessous regroupe les solubilités théoriques de quelques formes courantes les moins solubles.

| Nom | Formule | Forme Hg | Degré Oxydation | Solubilité Hg (µg/l) |
|---|---|---|---|---|
| Bromure mercureux | Hg2Br2 | $Hg_2^{2+}$ | +1 | 10 |
| Carbonate mercureux | Hg2CO3 | $Hg_2^{2+}$ | +1 | 4 |

(suite)

| Nom | Formule | Forme Hg | Degré Oxydation | Solubilité Hg ($\mu$g/l) |
|---|---|---|---|---|
| Iodure mercureux | Hg2I2 | $Hg_2^{2+}$ | +1 | 0,1 |
| Cyanure mercureux | Hg2(CN)2 | $Hg_2^{2+}$ | +1 | <0,01 |
| Sulfure mercurique | HgS | | +2 | <0,01 |

Toutefois, deux propriétés du mercure limitent le choix :
Dans de nombreux cas, les composés mercuriels forment des liaisons covalentes avec leur co-élement, ce qui augmente fortement la solubilité de ces composés dans des milieux organiques. Cette caractéristique augmente la probabilité de remobilisation du mercure par contact postérieur avec un milieu contenant des ligands potentiels (par exemple les ions chlorures).

Le sulfure mercurique fait partie des formes les moins solubles du mercure. Cette forme est donc tout à fait indiquée pour le stockage. De plus, c'est la forme dans laquelle se trouve le plus souvent le mercure à l'état naturel : le cinabre. Elle présente cependant un inconvénient : en milieu oxydant, les ions sulfure peuvent se transformer et libérer du mercure métal. Les inventeurs ont défini un procédé qui permet d'obtenir un produit solidifié, notamment un monolithe prenant en compte cet aspect.

Par ailleurs, l'ion sulfure ne peut pas former directement du sulfure mercurique avec le mercure métal pour des questions d'équilibre. Une réaction intermédiaire doit donc être réalisée qui transforme le mercure métal en mercure ionique. Pour ce faire, un agent oxydant est nécessaire. Or un excès de cet agent oxydant provoquerait l'instabilité du sulfure mercurique sur le long terme selon la règle émise précédemment.

• Le soufre

La réaction du soufre sur le mercure est connue pour des conditions de température supérieures à 100°C parfois sous pression et, en tous cas, sous atmosphère inerte et étanche pour gérer deux problèmes :

- la volatilité du mercure métal
- l'inflammabilité du soufre

Effectuer la réaction à température élevée n'est pas optimal alors que cela semble nécessaire afin de rendre le soufre liquide et accélérer la réaction.

Les inventeurs ont envisagé une alternative tirant parti du fait que le soufre est soluble dans des solutions concentrées de sulfure de sodium où il forme des polysulfures qui sont des petits oligomères du soufre.

La réaction d'oxydation du mercure dans une solution concentrée de polysulfure a donc été testée et s'est avérée particulièrement efficace à température ambiante. Dans ces conditions les inventeurs ont formé un sulfure ou un polysulfure de mercure insoluble et stable.

• Etape 1 : Formation d'un polysulfure et oxydation du mercure

$$S^{2-} + x\,S \rightarrow S_{(x+1)}^{2-}$$

$$S_{(x+1)}^{2-} + Hg \rightarrow HgS + S_x^{2-}$$

Les problématiques qui ont été observées pour mettre en œuvre cette approche concernaient la quantité d'eau nécessaire à la dissolution du sulfure notamment du sulfure de sodium, dissolution nécessaire au bon déroulement des opérations. En effet toute quantité eau ajoutée pendant la première phase de l'opération augmente le volume global et les matières premières lors des phases suivantes. Les inventeurs ont donc aménagé des conditions utilisant le fait que la solubilité du sulfure de sodium augmente fortement avec la température (par exemple le sulfure de sodium nonahydraté fond vers 40°C). En conséquence une réaction a été effectuée qui permet la sulfuration du mercure en présence d'une solution concentrée de polysulfure obtenue avec du sulfure dissous à une température voisine de 40°C.

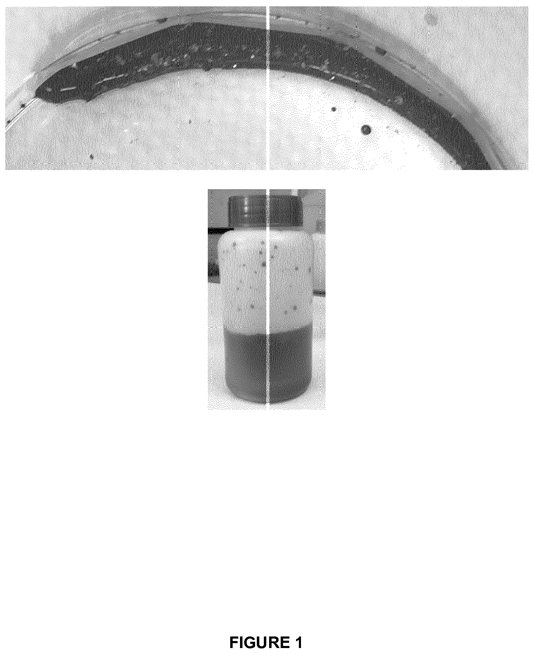

Après réaction, on a obtenu une boue rouge sang (Figure 1), d'aspect typique du cinnabre, directement intégrable dans l'étape de solidification. Une telle méthode a de ce fait été considérée comme industrialisable.

• Etape 2 : solidification des produits de réactions

Plusieurs essais ont été effectués et tous ont produit des monolithes conformes aux critères de stockage en ISDD Les détails sont rapportés dans le tableau opératoire.

Pour obtenir des résultats conformes aux normes de stockage, avec le minimum de complexité, une matrice cimentaire particulière a été définie : elle comporte un mélange de liant ettringitique complété avec une poudre d'argile, l'ensemble étant adjuvanté par un hydrofuge de masse.

Les inventeurs ont montré que le liant ettringitique ainsi réalisé, couplé à l'argile permet d'intégrer directement la boue liquide car l'hydratation de l'argile et du liant consomme beaucoup plus d'eau qu'une matrice cimentaire classique. En effet, si l'on regarde ci-dessous les équations d'hydratation d'un ciment Portland et d'un liant ettringitique, en notation cimentière, on constate que ce dernier capte environ 4 fois plus d'eau. L'argile, de par sa structure absorbante, accentue d'autant plus cet effet et l'on obtient donc un système permettant d'intégrer de fortes quantités d'eau dans sa structure.

Equations de réaction en notation cimentière des liants OPC et ettringitique et eau théorique fixée Ciment Portland

$$C3S + 3\ H = CSH + 2\ CH$$

(où C3S est l'alite ou silicate tri-calcique et CSH est le silicate de calcium hydraté)

Un tel ciment absorbe une quantité d'eau théorique d'environ. 200 L/T

Ciment ettringitique

$$C4A3\$ + 2\ C\$\ (gypse) + 38\ H = C6A\$H32 + 2\ AH3$$

où \$ signifie $SO_3$ suivant la convention des cimentiers.

Un tel ciment absorbe une quantité d'eau théorique d'environ 800 L/T

Le réseau hydrophobique de l'hydrofuge de masse permet d'éviter toute pénétration d'eau ce qui apporte un excellent comportement à la lixiviation. En effet, l'argile est très hydrophile et, en l'absence d'agent hydrophobe, on observe une coloration jaune lors de la lixiviation témoignant de la présence de polysulfure de sodium.

Un système ettringitique approprié pour la réalisation de l'invention a pu être réalisé directement depuis ALICEM (commercialisé par Ciments Calcia - Italcementi Group) qui est un mélange de clinker sulfo-alumineux et de sulfate de calcium micronisé dosé en proportions stoechiométriques. Il peut aussi être réalisé à partir du clinker ALIPRE (clinker sulfo-alumineux) (commercialisé par Ciments Calcia - Italcementi Group) et d'une source de sulfate de calcium.

Alternativement, le système ettringitique peut être réalisé à partir d'un autre clinker sulfoalumineux, ou encore d'un aluminate tri-clacique (C3A selon la notation des cimentiers), ou depuis toutes formes d'alumine, de calcium et de sulfate compatibles.

On peut aussi utiliser des systèmes analogues en complément ou en substitution : carboettringite, chloroettringite, shigaite, Sel de Friedel, etc... Le système ettringitique permet, en effet, une intégration d'ions équivalents dans son réseau, ce qui en fait un système tout à fait adapté à la stabilisation de déchets complexes. Le tableau ci-dessous présente quelques équivalences connues dans le système ettringitique.

| Ettringite | Equivalence |
|------------|-------------|
| Calcium | Zinc, manganèse(II), cuivre(II), baryum |
| Alumine | Oxyde de fer(III) |
| Sulfate | Carbonate, chlorure, nitrate, chromate, molybdate |

Le réseau hydrophobique est apporté par hydrofuge de masse comprenant un organo-silane qui réagit dans la matrice pour former un gel silicone hydrophobe. Ce système peut être utilisé seul ou bien en présence d'additifs permettant de renforcer son effet hydrophobe tels que : stéarates, carboxylates lourds, huile silicone, etc...

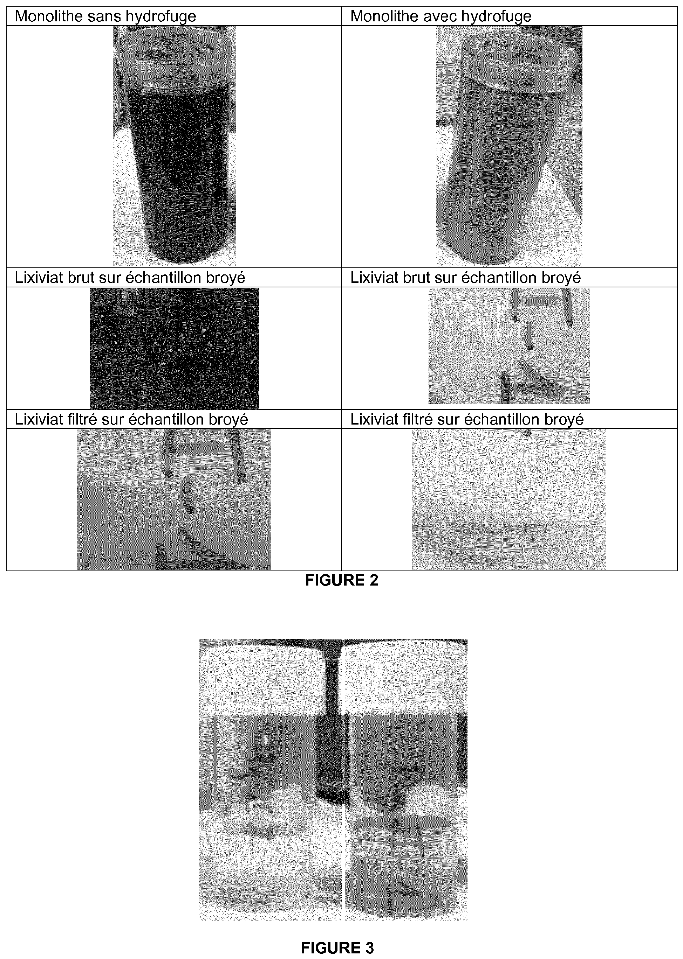

Le tableau de la figure 2 présente les résultats visuels obtenus avec le système ettringitique : le monolithe final et le lixiviat obtenus sur échantillon broyé en poudre, c'est-à-dire dans une configuration plus contraignante que le test normalisé imposé sur le plan réglementaire sont montrés. On constate la présence visuelle de polysulfure de sodium jaune soluble dans le lixiviat de l'échantillon non hydrofugé. Dans la version hydrofugée, l'eau n'a pas pu pénétrer correctement dans les particules, c'est donc logiquement que l'on obtient un lixiviat très propre.

Dans le système ettringitique, la vitesse de prise, son intensité ainsi que de nombreux paramètres peuvent être ajustés via des additifs dont la liste identifiée est notamment la suivante :

Triethanolamine (TEA), triisopropanolamine (TIPA), diethanolamine (DEA), acide citrique et sels, acide lactique et sels, acide formique et sels, acide acétique et sels, acide oxalique et sels, acide tartrique et sels, acides 2-hydroxy-carboxylique et leurs sels, aluminates alcalins, fluoroaluminates et analogues, chloroaluminates et analogues, sulfoaluminates et analogues, sels de manganèse (II), sels ferriques, carbonates alcalins, calcaire et carbonate de magnésium ultrafins, sels de lithium, glycine.

Ces composants peuvent être remplacés par les réactifs qui permettent de les obtenir. Par exemple : les « sulfoaluminates » incluent le sulfate d'aluminium ou un mélange d'acide sulfurique et d'hydroxyde d'aluminium permettant de préparer le sulfoaluminate.

Le malaxage de la pâte, nécessaire pour obtenir un mélange homogène, peut se faire selon les différentes techniques utilisées connues de l'homme du métier (malaxeur planétaire, pétrin, à palettes, etc...).

Le suivi des vapeurs de mercure émanant du produit formé au fil de la réaction de traitement a été réalisé au-dessus des différents réacteurs via un système Draeger (ou peut l'être au moyen de tout système approprié analogue) pendant toutes les phases de l'opération et à aucun moment il n'a été détecté de mercure.

Enfin, dans tous les cas, le procédé au polysulfure couplé aux systèmes éttringite/argile a permis d'obtenir des monolithes répondant largement aux critères d'admissibilité en ISDD pour la lixiviation du mercure.

Le procédé selon l'invention permet donc d'obtenir des matrices liantes présentant des performances mécaniques très élevées et une porosité très faible.

Le mode opératoire des différentes étapes du traitement est exposé ci-dessous.

Mode opératoire

En fonction des objectifs et des contraintes d'exploitation, il peut être facilement adapté pour obtenir, avant durcissement final, une « pâte mortier » extrudable ou coulable.

Tableau résumé d'un exemple d'opération

| Etape | Ordre | Type | Paramètre | Exemple | Unité | Mini | Maxi |
|---|---|---|---|---|---|---|---|
| Sulfuration (réacteur agité) | 1 | Ajouter | Sulfure de sodium nonahydraté | 1,6 | T | 0,3 | 2 |
| | 2 | Chauffer | (fusion du Na2S.9H2O) | 60 | °C | 20 | 100 |
| | 3 | Ajouter | Soufre | 0,65 | T | 0,3 | 1 |
| | 4 | Ajouter | Mercure | 1 | T | | |
| | | | | 108 | H | 1 | 240 |
| Transfert du réacteur vers le malaxeur | | | | | | | |
| Malaxage | 2 | Ajouter | Argile | 1,5 | T | 0 | 2 |
| | 3 | Ajouter | ALICEM | 1,7 | T | 0 | 2 |
| | 4 | Ajouter | Additif hydrofuge de masse | 0,06 | T | 0 | 0,25 |
| | 5 | Malaxage | Malaxage complémentaire | 3 | min | 0,5 | 10 |

Tableau des résultats d'analyse du mercure gazeux en fonction des étapes (système de mesure Draeger)

| Etape | Mercure |
|---|---|
| Etat initial (mercure métal) | >> 2 mg/m3 |
| Après réaction de sulfuration (phase boue) | < 0,05 mg/m3 |
| Pendant le malaxage avec liants | < 0,05 mg/m3 |
| Au-dessus des éprouvettes avant prise | < 0,05 mg/m3 |
| Au-dessus des éprouvettes après prise | < 0,05 mg/m3 |

(suite)

| Etape | Mercure |
|---|---|
| Au-dessus d'un échantillon d'éprouvette broyée | < 0,05 mg/m3 |

Pour pouvoir être stocké en installation de stockage de déchets dangereux (ISDD), un déchet mercuriel doit répondre aux critères généraux des déchets stabilisés. il a été indiqué précédemment que le sulfure mercurique était la forme la plus indiquée pour le stockage du mercure, d'ailleurs il s'agit de la forme dans laquelle se trouve le mercure à l'état naturel sur Terre. Cependant, en milieu oxydant, le cinnabre peut commencer à se décomposer pour former des vapeurs de mercure. Cette réaction est beaucoup plus rapide et prononcée lorsque la température augmente. Pour garantir un stockage sur le très long terme sans formation de vapeurs mercurielles, le milieu dans lequel se trouve encapsulé le déchet stabilisé doit être réducteur. La détermination de cette particularité est réalisable sur le déchet stabilisé et sur le lixiviat selon le projet de norme XP CEN/TS 16660 publié en 2015.

Afin de valider le procédé, 4 essais de traitement complets ont été réalisés. Le suivi du mercure vapeur a été effectué avec un appareil Draeger (Dräger Safety - France) pendant toutes les différentes opérations puis, après une maturation de 28 jours, une série d'analyses a été faite suivant les normes en vigueur :

- 2 lixiviations 24H selon norme NF EN 12457-2 avec analyses des critères de stockage accompagnés d'analyses complémentaires.

- Mesure de la résistance à la compression sur éprouvette cylindrique selon la norme EN 12390-3

- Mesure de la perte de masse pendant immersion selon la norme CEN/TS 16775 :2014

- Mesure des propriétés réductrices du déchet stabilisé et du lixiviat selon norme XP CEN/TS 16660

Le tableau ci-dessous résume les résultats d'analyse pour 5 traitements différents.

Les déchets traités sont une boue mercurielle contenant 30% de mercure élémentaire (Hg IV/1) ou des déchets comportant une teneur de 100% de mercure élémentaire (Hg III/1, Hg III/4, Hg II/2, Hg II/1). Pour la réalisation des essais, les quantités et le cas échéant la composition des réactifs ont été modulées.

Les résultats contenus dans le tableau ci-dessous montrent que la teneur du déchet traité en mercure lixiviable est largement au-dessous des limites acceptées selon la législation européenne et ce même en faisant varier les proportions relatives des constituants du système liant ettringitique mais aussi de la proportion de soufre.

L'indication « type sulfure » correspond à la dilution du sulfure.

Le « déchet stabilisé » est le déchet obtenu en fin de traitement selon l'invention.

| Référence | Seuils | Hg IV/1 | Hg III/1 | Hg III/4 | Hg II/2 | Hg II/1 |
|---|---|---|---|---|---|---|
| Déchet Initial | | 1000 | 1000 | 1000 | 1000 | 1000 |
| Type Sulfure | | 15% | 33% | 33% | 33% | 33% |
| Quantité Sulfure | | 800 | 1000 | 1000 | 1000 | 1000 |
| Soufre | | 100 | 400 | 400 | 650 | 650 |
| Type Liant | | ETR | ETR | ETR | ETR | ETR |
| Quantité Liant | | 900 | 2000 | 1000 | 1200 | 1200 |
| Argile et fines | | 650 | 1600 | 2000 | 1500 | 1500 |
| Type Hydrofuge | | AG | SIL | MIX | SIL | |
| Quantité Hydrofuge | | 150 | 100 | 150 | 70 | |
| Type Déchet Initial | ISDD | Boue | Mercure | Mercure | Mercure | Mercure |
| Déchet Stabilisé — Masse Volumique déchet stabilisé (Kg/L) | | 1,7 | | | 2,1 | 2,45 |
| Déchet Stabilisé — Résistance à la Compression (MPa) | | 3,9 | <0.5 | 0,6 | 4,9 | NA |
| Déchet Stabilisé — Test délitement | | <2% | | | <2% | <2% |
| Déchet Stabilisé — Capacités Réductrices (mmol $O_2$/kg) | | 570 | 1172 | 1247 | 1316 | NA |
| Lixiviat 24H — pH | | 9,67 | 10,31 | 9,85 | 9,8 | 10,02 |
| Lixiviat 24H — Conductivité (µS/cm) | | 2460 | 9350 | 4350 | 8170 | 9452 |
| Lixiviat 24H — Redox (mV) | | -460 | -488 | -474 | -469 | NA |
| Lixiviat 24H — Capacités Réductrices (mmol $O_2$/kg MS) | | 151 | 782 | 320 | 416 | NA |
| Lixiviat 24H — COT (mg/kg MS) | 1000 | 115 | 96 | 116 | 110 | NA |
| Lixiviat 24H — Nickel (mg/kg MS) | 40 | < LD | < LD | < LD | < LD | < LD |
| Lixiviat 24H — Sodium (mg/kg MS) | | 4968 | 9620 | 20376 | 7816 | NA |

| | | | | | | |
|---|---|---|---|---|---|---|
| Aluminium (mg/kg MS) | | 28,7 | 69,9 | 218 | 57 | NA |
| Arsenic (mg/kg MS) | 25 | < LD | < LD | < LD | < LD | < LD |
| Baryum (mg/kg MS) | 300 | < | 0,5 | 0,2 | 0,5 | 0,8 |
| Calcium (mg/kg MS) | | 53 | 312 | 86 | 282 | 641 |
| Cadmium (mg/kg MS) | 5 | < LD | < LD | < LD | < LD | < LD |
| Cobalt (mg/kg MS) | | < LD | < LD | < LD | < LD | < LD |
| Chrome (mg/kg MS) | 70 | < LD | < LD | < LD | < LD | < LD |
| Cuivre (mg/kg MS) | 100 | < LD | < LD | < LD | < LD | 1,1 |
| Fer (mg/kg MS) | | < LD | < LD | < LD | < LD | 0,4 |
| **Mercure (mg/kg MS)** | **2** | **0,03** | **0,06** | **0,18** | **0,2** | **< LD** |
| Potassium (mg/kg MS) | | 354 | 361 | 989 | 286 | 999 |
| Magnésium (mg/kg MS) | | 0,2 | 1,7 | 2,1 | 1,9 | 1,4 |
| Manganèse (mg/kg MS) | | < LD | < LD | < LD | < LD | < LD |
| Molybdène (mg/kg MS) | 30 | < LD | < LD | < LD | < LD | 0,3 |
| Phosphore (mg/kg MS) | | 0,8 | 0,6 | 1,4 | 1,2 | 12 |
| Plomb (mg/kg MS) | 50 | < LD | < LD | < LD | < LD | < LD |
| Antimoine (mg/kg MS) | 5 | < LD | < LD | < LD | < LD | < LD |
| Selenium (mg/kg MS) | 7 | < LD | < LD | < LD | < LD | 0,1 |
| Etain (mg/kg MS) | | < LD | < LD | < LD | < LD | < LD |
| Vanadium (mg/kg MS) | | < LD | < LD | < LD | < LD | 0,6 |
| Zinc (mg/kg MS) | 200 | 0,4 | 1,2 | 2 | 0,9 | < LD |
| Tallium (mg/kg MS) | | < LD | < LD | < LD | < LD | NA |
| Tellure (mg/kg MS) | | < LD | < LD | < LD | < LD | NA |
| Strontium (mg/kg MS) | | 1,54 | 6,97 | 23,03 | 6,11 | NA |
| Silicium (mg/kg MS) | | 156,5 | 134,1 | 9,2 | 140,9 | NA |
| Fluorure (mg/kg MS) | 500 | < LD | < LD | < LD | < LD | < LD |

- COT = Carbone Organique Total

Les valeurs non exprimées, marquées sont inférieures à la limite de détection de la méthode utilisée. Les mesures ont été effectuées par spectrophotométrie d'émission plasma (ICP) sur la matrice aqueuse pour les éléments métalliques ou minéraux et par colorimétrie pour le fluorure.

On constate que la norme pour le stockage en installation de stockage de déchets dangereux (ISDD) est largement respectée. Sur une série de 16 lixiviations, aucun cas de dépassement pour le mercure n'a été constaté.

De plus, pour les références Hg II/1 et Hg II/2 des essais de lixiviation 24H à 91 jours ont été effectués et n'ont pas montré de dépassements des seuils, ni d'ailleurs d'augmentation significative par rapport aux valeurs à 28 jours.

Les résistances mécaniques sont satisfaisantes et aucun délitement n'est mesuré sauf pour la série Hg III. Il faut signaler cependant que cette série avait pour objet de tester les effets de stabilisation du mercure en mode « dégradé », c'est-à-dire avec des valeurs très faibles de liant. On constate ainsi que, malgré le délitement des éprouvettes de la série III et leurs tenues mécaniques insuffisantes, les effets chimiques de stabilisation du mercure permettent de maintenir une encapsulation satisfaisante au niveau microscopique. Les résultats de lixiviation sont donc tout à fait conformes.

Les résultats des mesures des capacités réductrices des lixiviats et des déchets stabilisés montrent de fortes capacités réductrices dans tous les cas. Ces valeurs sont directement liées à l'excès de sulfure et de soufre et cette capacité est donc capable de se projeter dans les lixiviats.

La série IV correspond à des essais sur un déchet industriel de type mercuriel contenant environ 30-40% de mercure métal et des boues.

Les résultats sont globalement concluants et permettent la validation de la méthode.

## EP 3 228 610 B1

**Revendications**

1. Procédé de traitement de déchets mercuriels comprenant la transformation du mercure élémentaire en sulfure de mercure suivie d'une opération d'encapsulation du sulfure de mercure produit, par incorporation directe, en particulier sous la forme d'une boue mercurielle liquide comprenant le sulfure de mercure, dans une matrice comprenant un liant ettringitique à base de sulfo-aluminate de calcium, une argile et un agent hydrofuge de masse, pour former un produit solide, en particulier un monolithe, ou un produit pâteux dans lequel le mercure élémentaire est immobilisé, la matrice pour l'encapsulation comprenant les proportions suivantes de composés : de 0,1 à 4T de liant ettringitique à base de sulfo-aluminate de calcium pour 0,1 à 4T, d'argile et 2 à 250kg d'agent hydrofuge pour une quantité de déchets mercuriels traités de 1T.

2. Procédé de traitement de déchets mercuriels selon la revendication 1, ledit procédé comprenant une opération de stabilisation chimique en milieu aqueux du mercure élémentaire pour produire du sulfure de mercure, en particulier à l'état de boue liquide, suivie d'une opération d'encapsulation pour former un produit solide, en particulier un monolithe, ou un produit pâteux, par incorporation directe du sulfure de mercure, en particulier de la boue mercurielle, dans une matrice comprenant un liant ettringitique à base de sulfo-aluminate de calcium, une argile et un agent hydrofuge de masse.

3. Procédé selon la revendication 2, dans lequel l'opération de stabilisation chimique du mercure comprend une étape de sulfuration du mercure dans une solution de polysulfure à une température comprise dans un intervalle de 18°C à 60°C, en particulier à une température de 40°C, pour former un sulfure de mercure insoluble et stable.

4. Procédé selon la revendication 3 dans lequel le polysulfure utilisé est obtenu par la réaction du soufre avec un sulfure en milieu aqueux, par exemple avec un sulfure choisi parmi le sulfure de sodium, en particulier le sulfure de sodium nonahydraté $Na_2S.9H_2O$, le sulfure de potassium, le sulfure d'ammonium, le sulfure de magnésium et le sulfure de calcium.

5. Procédé de traitement de déchets mercuriels selon l'une quelconque des revendications 1 à 4, dans lequel le liant ettringitique à base de sulfo-aluminate de calcium comprend en outre les composés suivants :

   (i) par adjuvantation et/ou par intégration des composés du déchet à traiter, un composé ettringique dans lequel le calcium est remplacé par du zinc, du manganèse (II), du cuivre (II) ou du baryum, l'alumine est remplacée par de l'oxyde de fer et/ou le sulfate est remplacé par un carbonate, chlorure, nitrate, chromate ou molybdate, notamment en substitution par les composés des déchets ; et/ou
   (ii) un liant carboettrintique, chloroéttringitique, de la shigaite, ou un sel de Friedel, lesdits composés étant apportés en complément ou en substitution d'une partie du liant ettringitique de sulfo-aluminate de calcium.

6. Procédé de traitement de déchets mercuriels selon l'une quelconque des revendications 1 à 5, dans lequel la matrice d'encapsulation comprend :

   a. un liant ettringitique à base de clinker sulfo-alumineux et de sulfate de calcium, notamment un liant à base de clinker de sulfoaluminate de calcium ou un liant à base d'aluminate tri-calcique,
   b. une argile,
   c. un agent hydrofuge de masse qui comprend un composé organosilane, en particulier un agent à base de silicone, par exemple adjuvanté avec du stéarate de calcium.

7. Procédé de traitement de déchets mercuriels selon l'une quelconque des revendications 1 à 6, dans lequel dans la matrice d'encapsulation, les proportions en poids de liant ettringitique et d'argile sont identiques ou la proportion en poids d'argile est inférieure jusqu'à 50% à la proportion en poids de liant ettringitique.

8. Procédé selon l'une quelconque des revendications 1 à 7 dans lequel l'opération d'encapsulation comprend une étape de malaxage, par exemple dans un malaxeur planétaire, un pétrin, un malaxeur à palettes.

9. Procédé selon la revendication 8 dans lequel le malaxage est réalisé pendant une durée de moins de 10 minutes, par exemple pendant une durée de 1 à 7 minutes ou de 1 à 3 minutes et est suivie d'une étape de durcissement optionnellement réalisée dans un système de conditionnement du produit solidifié, par exemple des alvéoles de stockage ou des bigbags.

**10.** Procédé selon l'une quelconque des revendications 1 à 9, dans lequel l'opération de stabilisation chimique comprend une étape de mise en contact du mercure et du polysulfure dans un rapport molaire S/Hg de 2 à 10, à une température de l'ordre de 20 à 100°C et en particulier à un pH basique notamment un pH supérieur ou égal à 7,5.

**11.** Procédé selon l'une quelconque des revendications 1 à 10, **caractérisé en ce que** les déchets à traiter sont des déchets comprenant, outre du mercure élémentaire, des polluants choisis parmi les composés mercuriels sous forme mercurique ou mercureux, ou parmi les polluants minéraux suivants: Nickel, Sodium, Aluminium, Arsenic, Baryum, Calcium, Cadmium, Cobalt, Chrome, Cuivre, Fer, Potassium, Magnésium, Manganèse, Molybdène, Phosphore, Plomb, Antimoine, Selenium, Etain, Vanadium, Zinc, Tallium, Tellure, Strontium, Silicium et Fluorure.

**12.** Procédé selon l'une quelconque des revendications 1 à 11 dans lequel les déchets mercuriels à traiter sont des déchets industriels comprenant au moins 1%, en particulier au moins 5%, notamment au moins 10% ou 20% et par exemple de 10% à 40% de mercure élémentaire.

**13.** Procédé selon l'une quelconque des revendications 1 à 12, comprenant les étapes suivantes :

    a. dans un réacteur, effectuer une sulfuration par :

        i. apport dans ledit réacteur du polysulfure à l'état liquide, en particulier de polysulfure de sodium, de polysulfure de potassium, de polysulfure d'ammonium, de polysulfure de calcium,
        ii. addition au produit de l'étape i) de soufre sous forme solide et des déchets à traiter contenant du mercure élémentaire ou addition d'un mélange solide de ces déchets avec du soufre ledit mélange étant préalablement effectué dans des conditions permettant d'imprégner le mercure sur le soufre,

    b. transférer les produits obtenus à l'étape a. dans un malaxeur et ajouter, le cas échéant successivement et dans cet ordre, une argile, un agent hydrofuge de masse et un liant ettringitique à base de sulfo-aluminate de calcium, en particulier un liant ettringitique à base de clinker de sulfoaluminate de calcium,
    c. malaxer pendant une durée de 0,5 à 10 minutes, en particulier pendant une durée inférieure à 5 minutes, notamment pendant 1 à 3 minutes, jusqu'à obtention d'une pâte, en particulier d'une pâte mortier extrudable ou coulable,
    d. optionnellement réaliser une étape de durcissement jusqu'à obtention d'un produit solidifié, en particulier d'un monolithe.

**14.** Procédé selon l'une quelconque des revendications 1 à 13 dans lequel le polysulfure est obtenu à l'issue d'une épate de chauffage du sulfure solide à une température au moins égale à la température de fusion dudit sulfure, par exemple du sulfure de sodium hydraté chauffé à environ 60°C.

**15.** Procédé selon l'une quelconque des revendications 1 à 14 comprenant une étape de contrôle du fait que la teneur en mercure gazeux contenu dans le produit solide obtenu à l'issue du traitement est en quantité inférieure à 2 mg/m$^3$, notamment en quantité inférieure ou égale à 0,05 mg/m$^3$ ou inférieure ou égale à 0,005 mg/kg.

**16.** Procédé selon l'une quelconque des revendications 1 à 15 dans lequel la matrice comprend un liant ettringitique à base de sulfo-aluminate de calcium, une argile et un agent hydrofuge de masse et dans laquelle :

    a. un liant ettringitique à base de sulfo-aluminate de calcium, en particulier un liant ettringitique à base de clinker sulfo-alumineux et de sulfate de calcium, en particulier un liant à base de clinker de sulfoaluminate de calcium ou un liant à base d'aluminate tri-calcique et
    b. l'agent hydrofuge de masse est un composé organosilane qui est un agent à base de silicone additionné de stéarate de calcium.


**Patentansprüche**

**1.** Verfahren zur Behandlung quecksilberhaltiger Abfälle, umfassend die Umwandlung von elementarem Quecksilber in Quecksilbersulfid, gefolgt von einer Einkapselungsmaßnahme des gebildeten Quecksilbersulfids durch direkte Einbindung, insbesondere in Form eines flüssigen quecksilberhaltigen Schlamms, der das Quecksilbersulfid enthält, in eine Matrix, die einen ettringitischen Binder auf Basis von Calciumsulfoaluminat, Ton und ein Massenhydrophobierungsmittel enthält, zur Bildung eines festen Produkts, insbesondere eines Monolithen, oder eines pastösen Produkts, in dem elementares Quecksilber immobilisiert ist, wobei die Einkapselungsmatrix die folgenden Anteile an Verbindungen aufweist : von 0,1 bis 4T ettringitischer Binder auf Basis von Calciumsulfoaluminat pro 0,1 bis 4T Ton und 2 bis 250kg Massenhydrophobierungsmittel für eine behandelte Menge quecksilberhaltiger Abfälle von 1T.

2. Verfahren zur Behandlung quecksilberhaltiger Abfälle nach Anspruch 1, wobei das Verfahren eine chemische Stabilisierung des elementaren Quecksilbers in wässriger Umgebung zur Erzeugung von Quecksilbersulfid umfasst, insbesondere in Form eines flüssigen Schlamms, gefolgt von einer Einkapselungsoperation zur Bildung eines festen Produkts, insbesondere eines Monolithen, oder eines pastösen Produkts durch direkte Einbindung des Quecksilbersulfids, insbesondere des quecksilberhaltigen Schlamms, in eine Matrix, die einen ettringitischen Binder auf Basis von Calciumsulfoaluminat, Ton und ein Massenhydrophobierungsmittel enthält.

3. Verfahren nach Anspruch 2, wobei die chemische Stabilisierung des Quecksilbers einen Schritt der Sulfidierung des Quecksilbers in einer Polysulfidlösung bei einer Temperatur im Bereich von 18°C bis 60°C umfasst, insbesondere bei einer Temperatur von 40°C, um ein unlösliches und stabiles Quecksilbersulfid zu bilden.

4. Verfahren nach Anspruch 3, wobei das verwendete Polysulfid durch Reaktion von Schwefel mit einem Sulfid in wässriger Lösung gewonnen wird, z. B. mit einem Sulfid ausgewählt aus Natriumsulfid, insbesondere dem non-ahydratisierten Natriumsulfid $Na_2S.9H_2O$, Kaliumsulfid, Ammoniumsulfid, Magnesiumsulfid und Calciumsulfid.

5. Verfahren zur Behandlung quecksilberhaltiger Abfälle nach einem der Ansprüche 1 bis 4, wobei der ettringitische Binder auf Basis von Calciumsulfoaluminat ferner die folgenden Verbindungen enthält :

(i) durch Zusatz und/oder Einarbeitung der zu behandelnden Abfallverbindungen eine Etringitverbindung, in der Calcium durch Zink, Mangan (II), Kupfer (II) oder Barium ersetzt ist, Aluminiumoxid durch Eisenoxid ersetzt ist und/oder Sulfat durch ein Carbonat ersetzt ist, Chlorid, Nitrat, Chromat oder Molybdat, insbesondere durch Substitution durch die Abfallverbindungen; und/oder
(ii) ein carboettringitischer, chloroettringitischer Binder, Shigaite oder ein Friedelsalz, wobei diese Verbindungen ergänzend oder als Ersatz für einen Teil des ettringitischen Binders auf Basis von Calciumsulfoaluminat eingebracht werden.

6. Verfahren zur Behandlung quecksilberhaltiger Abfälle nach einem der Ansprüche 1 bis 5, wobei die Einkapselungsmatrix Folgendes umfasst :

a. einen ettringitischen Binder auf Basis von Calciumsulfoaluminat und Calciumsulfat, insbesondere einen Binder auf Basis von Calciumsulfoaluminat-Klinker oder einen Binder auf Basis von Tricalciumaluminat,
b. Ton,
c. ein Massen-Hydrophobierungsmittel, das eine Organosilanverbindung umfasst, insbesondere ein silikonbasiertes Mittel, das beispielsweise mit Calciumstearat versetzt ist.

7. Verfahren zur Behandlung quecksilberhaltiger Abfälle nach einem der Ansprüche 1 bis 6, wobei in der Verkapselungsmatrix die Massenanteile des ettringitischen Binders und des Tons identisch sind oder der Massenanteil des Tons um bis zu 50 % geringer ist als der Massenanteil des ettringitischen Binders.

8. Verfahren nach einem der Ansprüche 1 bis 7, bei dem der Verkapselungsvorgang einen Mischschritt umfasst, zum Beispiel in einem Planetenmischer, einem Kneter oder einem Schaufelmischer.

9. Verfahren nach Anspruch 8, wobei das Mischen für eine Dauer von weniger als 10 Minuten durchgeführt wird, beispielsweise für eine Dauer von 1 bis 7 Minuten oder von 1 bis 3 Minuten, und von einem optionalen Aushärtungsschritt gefolgt wird, der in einem System zur Verpackung des verfestigten Produkts durchgeführt werden kann, zum Beispiel in Lagerzellen oder in Bigbags.

10. Verfahren nach einem der Ansprüche 1 bis 9, bei dem die chemische Stabilisierung einen Kontakt zwischen Quecksilber und Polysulfid in einem molaren Verhältnis S/Hg von 2 bis 10 umfasst, bei einer Temperatur von etwa 20 bis 100 °C und insbesondere in einem basischen pH-Bereich, namentlich einem pH-Wert größer oder gleich 7,5.

11. Verfahren nach einem der Ansprüche 1 bis 10, **dadurch gekennzeichnet, dass** die zu behandelnden Abfälle Abfälle sind, die neben elementarem Quecksilber Schadstoffe umfassen, die aus quecksilberhaltigen Verbindungen in mercurischer oder mercuröser Form ausgewählt sind oder aus den folgenden mineralischen Schadstoffen: Nickel, Natrium, Aluminium, Arsen, Barium, Calcium, Cadmium, Kobalt, Chrom, Kupfer, Eisen, Kalium, Magnesium, Mangan, Molybdän, Phosphor, Blei, Antimon, Selen, Zinn, Vanadium, Zink, Thallium, Tellur, Strontium, Silicium und Fluorid.

12. Verfahren nach einem der Ansprüche 1 bis 11, bei dem die zu behandelnden quecksilberhaltigen Abfälle Industrieabfälle sind, die mindestens 1 %, insbesondere mindestens 5 %, insbesondere mindestens 10 % oder 20 % und beispielsweise 10 % bis 40 % an elementarem Quecksilber enthalten.

13. Verfahren nach einem der Ansprüche 1 bis 12, umfassend die folgenden Schritte :

a. In einem Reaktor eine Sulfidierung durchführen durch :

i. Zuführung in den genannten Reaktor des Polysulfids in flüssigem Zustand, insbesondere Natriumpolysulfid, Kaliumpolysulfid, Ammoniumpolysulfid, Calciumpolysulfid,

ii. Zugabe zum Produkt des Schritts i) von Schwefel in fester Form und von zu behandelnden Abfällen, die elementares Quecksilber enthalten, oder Zugabe einer festen Mischung dieser Abfälle mit Schwefel, wobei zuletzt genanntes Gemisch zuvor unter Bedingungen hergestellt wird, die es ermöglichen, das Quecksilber auf dem Schwefel zu imprägnieren,

b. Die in Schritt a. erhaltenen Produkte in einen Mischer überführen und gegebenenfalls nacheinander und in dieser Reihenfolge hinzufügen: einen Ton, ein Massenhydrophobierungsmittel und einen ettringitischen Binder auf Basis von Calciumsulfoaluminat, insbesondere einen ettringitischen Binder auf Basis von Calciumsulfoaluminat-Clinker,

c. Mischen für eine Dauer von 0,5 bis 10 Minuten, insbesondere für eine Dauer von weniger als 5 Minuten, insbesondere 1 bis 3 Minuten, bis eine Paste erhalten ist, insbesondere eine extrudierbare oder gießbare Mörtelpaste,

d. Wahlweise einen Aushärtungsschritt durchführen, bis ein verfestigtes Produkt erreicht ist, insbesondere ein Monolith.

14. Verfahren nach einem der Ansprüche 1 bis 13, wobei das Polysulfid nach einem Erhitzungsschritt des festen Sulfids bei einer Temperatur erhalten wird, die mindestens der Schmelztemperatur des genannten Sulfids entspricht, beispielsweise durch Erhitzen von hydratisiertem Natriumsulfid auf etwa 60 °C.

15. Verfahren nach einem der Ansprüche 1 bis 14, mit einem Kontrollschritt, der sicherstellt, dass der Gehalt an gasförmigem Quecksilber im festen Produkt nach der Behandlung in einer Menge von weniger als 2 mg/m$^3$ liegt, insbesondere in einer Menge kleiner oder gleich 0,05 mg/m$^3$ oder kleiner oder gleich 0,005 mg/kg.

16. Verfahren nach einem der Ansprüche 1 bis 15, wobei die Matrix einen ettringitischen Binder auf Basis von Calciumsulfoaluminat, einen Ton und ein Massenhydrophobierungsmittel umfasst und wobei :

a. einen ettringitischen Binder auf Basis von Calciumsulfoaluminat, insbesondere einen ettringitischen Binder auf Basis von Calciumsulfoaluminat-Klinker und Calciumsulfat, insbesondere einen Binder auf Basis von Calciumsulfoaluminat-Klinker oder einen Binder auf Basis von Tricalciumaluminat und

b. Das Massenhydrophobierungsmittel ist eine Organosilanverbindung, die ein silikonbasiertes Mittel ist, dem Calciumstearat zugesetzt ist.

## Claims

1. Process for treating mercury-containing waste comprising the conversion of elemental mercury into mercury sulfide followed by an encapsulation operation of the produced mercury sulfide, by direct incorporation, in particular in the form of a liquid mercury sludge comprising the mercury sulfide, into a matrix comprising an ettringitic binder based on calcium sulfoaluminate, a clay and a mass hydrophobic agent, to form a solid product, in particular a monolith, or a pasty product in which the elemental mercury is immobilised, the matrix for encapsulation comprising the following proportions of compounds: from 0.1 to 4 T of ettringitic binder based on calcium sulfoaluminate per 0.1 to 4 T of clay and 2 to 250 kg of mass hydrophobic agent for an amount of 1 T of mercury-containing waste treated.

2. Process for treating mercury-containing waste according to claim 1, said process comprising a chemical stabilisation operation in an aqueous medium of elemental mercury to produce mercury sulfide, in particular in the form of a liquid sludge, followed by an encapsulation operation to form a solid product, in particular a monolith, or a pasty product, by direct incorporation of the mercury sulfide, in particular the mercury sludge, into a matrix comprising an ettringitic binder based on calcium sulfoaluminate, a clay and a mass hydrophobic agent.

3. Process according to claim 2, wherein the chemical stabilisation operation of the mercury comprises a sulfidation step of the mercury in a polysulfide solution at a temperature in the range of 18°C to 60°C, in particular at a temperature of 40°C, to form an insoluble and stable mercury sulfide.

4. Process according to claim 3 in which the polysulfide used is obtained by reaction of sulfur with a sulfide in an aqueous medium, for example with a sulfide chosen from sodium sulfide, in particular the sodium sulfide nonahydrate $Na_2S.9H_2O$, potassium sulfide, ammonium sulfide, magnesium sulfide and calcium sulfide.

5. Process for treating mercury-containing waste according to any one of claims 1 to 4, wherein the ettringitic binder based on calcium sulfoaluminate further comprises the following compounds:

   (i) by admixing and/or by incorporation of the compounds of the waste to be treated, an ettringitic compound in which the calcium is replaced by zinc, manganese (II), copper (II) or barium, the alumina is replaced by iron oxide and/or the sulfate is replaced by a carbonate, chloride, nitrate, chromate or molybdate, notably by substitution with compounds from the waste; and/or
   (ii) a carboettringitic binder, chloroettringitic binder, shigaite, or a Friedel's salt, said compounds being supplied in addition to or in substitution for part of the ettringitic binder of calcium sulfoaluminate.

6. Process for treating mercury-containing waste according to any one of claims 1 to 5, wherein the encapsulation matrix comprises:

   a. an ettringitic binder based on sulfoaluminate clinker and calcium sulfate, in particular a binder based on calcium sulfoaluminate clinker or a binder based on tricalcium aluminate,
   b. a clay,
   c. a mass hydrophobic agent comprising an organosilane compound, in particular a silicone-based agent, for example admixed with calcium stearate.

7. Process for treating mercury-containing waste according to any one of claims 1 to 6, wherein, in the encapsulation matrix, the weight proportions of ettringitic binder and clay are identical, or the weight proportion of clay is up to 50% lower than the weight proportion of ettringitic binder.

8. Process according to any one of claims 1 to 7 in which the encapsulation operation comprises a mixing step, for example in a planetary mixer, a kneader, or a paddle mixer.

9. Process according to claim 8 in which the mixing is carried out for a duration of less than 10 minutes, for example for a duration of 1 to 7 minutes or 1 to 3 minutes, and is followed by a curing step optionally carried out in a packaging system for the solidified product, for example storage cells or big bags.

10. Process according to any one of claims 1 to 9, wherein the chemical stabilisation operation comprises a step of contacting the mercury and the polysulfide in a molar S/Hg ratio of 2 to 10, at a temperature of about 20 to 100°C and in particular at a basic pH, notably a pH greater than or equal to 7.5.

11. Process according to any one of claims 1 to 10, **characterised in that** the waste to be treated is waste comprising, in addition to elemental mercury, pollutants chosen from mercury compounds in mercuric or mercurous form, or from the following mineral pollutants: Nickel, Sodium, Aluminium, Arsenic, Barium, Calcium, Cadmium, Cobalt, Chromium, Copper, Iron, Potassium, Magnesium, Manganese, Molybdenum, Phosphorus, Lead, Antimony, Selenium, Tin, Vanadium, Zinc, Thallium, Tellurium, Strontium, Silicon and Fluoride.

12. Process according to any one of claims 1 to 11 in which the mercury-containing waste to be treated is industrial waste comprising at least 1% elemental mercury, in particular at least 5%, notably at least 10% or 20% and, for example, 10% to 40% elemental mercury.

13. Process according to any one of claims 1 to 12, comprising the following steps:

a. in a reactor, carry out a sulfidation by:

i. introduction into said reactor of the polysulfide in liquid form, in particular sodium polysulfide, potassium polysulfide, ammonium polysulfide, calcium polysulfide,

ii. addition to the product of step i) of sulfur in solid form and of the wastes to be treated containing elemental mercury, or addition of a solid mixture of these wastes with sulfur, said mixture having been previously prepared under conditions allowing the mercury to impregnate the sulfur,

b. transfer the products obtained in step a. into a mixer and add, where appropriate successively and in that order, a clay, a mass hydrophobic agent and an ettringitic binder based on calcium sulfoaluminate, in particular an ettringitic binder based on calcium sulfoaluminate clinker,

c. mix for a duration of 0.5 to 10 minutes, in particular for a duration of less than 5 minutes, notably for 1 to 3 minutes, until a paste is obtained, in particular an extrudable or pourable mortar paste,

d. optionally carry out a curing step until a solidified product is obtained, in particular a monolith.

14. Process according to any one of claims 1 to 13 in which the polysulfide is obtained following a heating step of the solid sulfide at a temperature at least equal to the melting temperature of said sulfide, for example hydrated sodium sulfide heated to about 60°C.

15. Process according to any one of claims 1 to 14 comprising a step of verifying that the concentration of gaseous mercury contained in the solid product obtained following the treatment is less than $2\,mg/m^3$, notably less than or equal to $0.05\,mg/m^3$ or less than or equal to 0.005 mg/kg.

16. Process according to any one of claims 1 to 15 in which the matrix comprises an ettringitic binder based on calcium sulfoaluminate, a clay and a mass hydrophobic agent and wherein :

a. an ettringitic binder based on calcium sulfoaluminate, in particular an ettringitic binder based on sulfoaluminate clinker and calcium sulfate, in particular a binder based on calcium sulfoaluminate clinker or a binder based on tricalcium aluminate and

b. the mass hydrophobic agent is an organosilane compound which is a silicone-based agent admixed with calcium stearate.

**FIGURE 1**

| Monolithe sans hydrofuge | Monolithe avec hydrofuge |
|---|---|
| | |
| Lixiviat brut sur échantillon broyé | Lixiviat brut sur échantillon broyé |
| | |
| Lixiviat filtré sur échantillon broyé | Lixiviat filtré sur échantillon broyé |
| | |

FIGURE 2

FIGURE 3

# EP 3 228 610 B1

## RÉFÉRENCES CITÉES DANS LA DESCRIPTION

**Documents brevets cités dans la description**

- US 4147626 A
- US 4844815 A
- US 6403044 B1
- US 6911570 B2
- WO 2006016076 A1
- US 7914757 B1
- US 8580880 B2
- JP 2015098432 A